Europäisches Patentamt

European Patent Office

Office européen des brevets

(19)

(11) Publication number:

**0 022 672**
**B1**

(12)

# EUROPEAN PATENT SPECIFICATION

(45) Date of publication of patent specification: **08.06.88**

(51) Int. Cl.⁴: **F 16 K 1/34,** F 16 K 1/42

(21) Application number: **80302362.1**

(22) Date of filing: **11.07.80**

---

(54) **Improved valve assembly, valve seat insert therefor and method of mounting said valve seat in a tap.**

---

(30) Priority: **13.07.79 AU 9576/79**

(43) Date of publication of application:
**21.01.81 Bulletin 81/03**

(45) Publication of the grant of the patent:
**08.06.88 Bulletin 88/23**

(84) Designated Contracting States:
**AT BE CH DE FR GB IT LI LU NL SE**

(56) References cited:
**DE-A-2 014 020**
**DE-A-2 640 897**
**DE-C- 158 992**
**DE-C- 638 462**
**FR-A- 443 430**
**FR-A- 949 732**
**GB-A- 198 962**
**GB-A- 307 614**

(73) Proprietor: **LEPONTINE PTY. LTD.**
**c/o James Baker & Co. 445 Upper Edward Street**
**Brisbane, Qeensland 4000 (AU)**

(72) Inventor: **Chilton, Henry Michael Stanley**
**629 Blunder Road**
**Durack, Queensland, 4007 (AU)**
Inventor: **Chilton, Nigel Patrick**
**5 Glenala Road**
**Durack, Queensland, 4007 (AU)**

(74) Representative: **Woodward, John Calvin et al**
**VENNER SHIPLEY & CO. 368 City Road**
**London EC1V 2QA (GB)**

---

Courier Press, Leamington Spa, England.

## Description

This invention relates to an improved valve assembly and in particularly to a valve assembly for use in a conventional water tap or the like.

Common taps utilise an annular valve seat against which a flat valve member is arranged to be engaged by screw pressure upon rotation of the tap handle to prevent flow of fluid from the tap. Such arrangements have the disadvantage that high axial pressure is required to effect the seal and the seal becomes ineffective after a period of time frequently due to pitting of the valve seat and/or the valve member wearing.

To avoid pitting of the valve seat it has been proposed in the specification of FR—A—949 732 to provide a valve seat insert member formed of resilient material which is engageable in a port in the tap housing. The valve seat member disclosed in this patent has a planar seating surface at one end and a barb like member at its other end which engages with a shoulder at the end of the port so that the seat is prevented from being dislodged from the port. The disadvantage of this arrangement however is that the valve seat has to be accurately sized so that the annular barb will engage behind the port shoulder and accordingly such a valve seat in not suitable for a wide variety of taps. Furthermore, the above arrangement suffers the disadvantage of taps having normal flat valve members in that water flow cannot be accurately controlled and a relatively high force has to be applied to the tap handle to close the valve and to ensure proper sealing.

The specifications of DE—C 158 992 and DE—A 2 014 020 disclose valve assemblies in which the co-operating valve members have frusto conical sealing surfaces. In both of these arrangements, however, the valve member is a solid member and has to be accurately guided into engagement with the valve seat to ensure proper sealing. Furthermore, the valve seat has to be accurately machined and in some cases threaded for proper sealing engagement within the valve body. Neither of the arrangements described in the above German patents is suitable or intended for use in domestic tap situations.

The specifications of DE—C 638 462 and DE—A 2 640 897 show taps with frusto conical sealing surfaces but there are disadvantages associated therewith.

The present invention seeks to overcome the above disadvantages.

With the foregoing and other objects in view, according to the present invention there is provided a valve assembly for a tap of the type having an inlet and outlet communicating through a flow passage, said tap including an actuating member adapted to be actuated to close and open said flow passage, said valve assembly including a valve member and a co-operable valve seat insert, said valve member having a stem portion adapted to be engaged with said acutating member and an enlarged head portion, said valve seat insert being of generally annular form and including an enlarged head portion and a reduced diameter relatively thin walled unthreaded shank portion, said enlarged head portion being adapted to be seated on an annular shoulder at one end of said flow passage, and the outer diameter of said shank portion being substantially the same as the diameter of said flow passage whereby said shank portion may be forced axially into said flow passage and held sealingly therein, characterised in that said head portion of the valve member includes a frusto conical leading surface and a frusto conical sealing surface extending rearwardly from said frusto conical leading surface, the included angle of said frusto conical leading surface being greater than the included angle of said frusto conical sealing surface, said frusto conical surfaces being coaxial with said stem portion, said enlarged head portion of the valve seat including a frusto conical valve seat formed coaxially with said shank portion, said valve seat being of complimentary shape to said frusto conical sealing surface and wherein said valve member is adapted to be advanced axially by actuation of said actuating member into engagement with said valve seat insert to close flow through said flow passage in a direction towards said valve member or retracted therefrom to permit said flow through said flow passage.

In order that the invention may be more readily understood and put into practical effect, reference will now be made by way of example only to the Figures of the accompanying drawings in which:

Figure 1 is a partially cutaway view of a tap utilising the valve assembly of the present invention;

Figure 2 and 3 are perspective views of the valve member and seat insert respectively of the valve assembly utilised in the tap illustrated in Figure 1;

Figures 4 and 5 are sectional elevational views of the valve member and seat insert respectively of the valve assembly utilised in the tap illustrated in Figure 1; and

Figures 6 and 7 are perspective and sectional views respectively of a tool for placing the seat insert.in the tap illustrated in Figure 1.

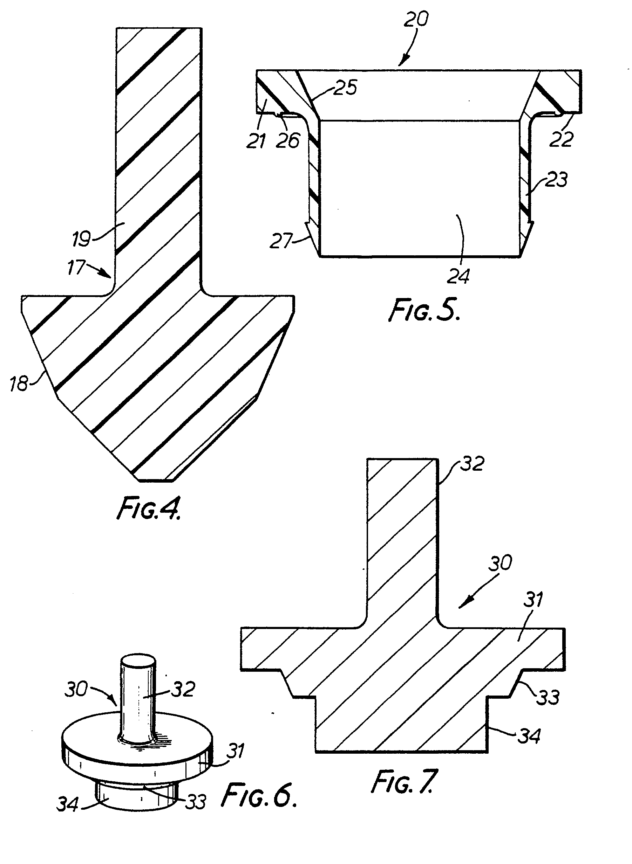

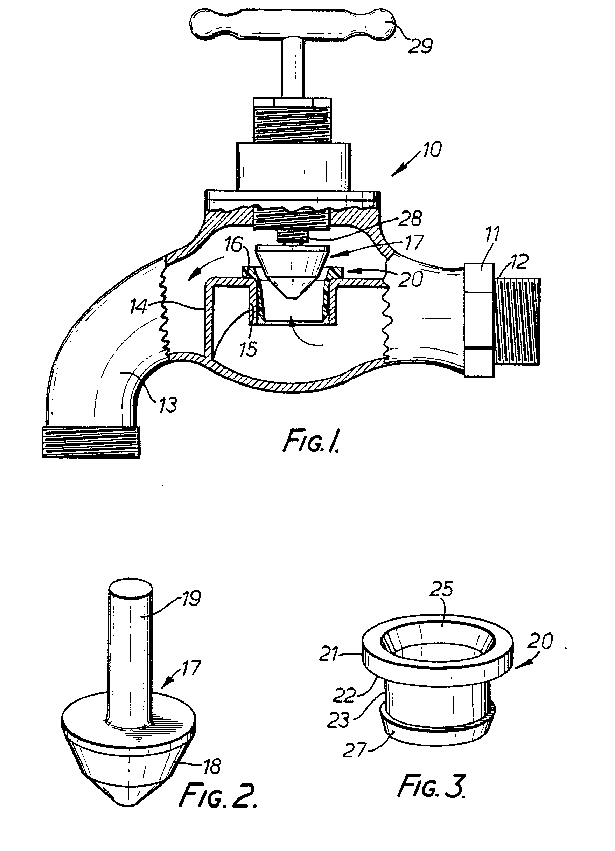

In Figure 1, a tap shown generally at 10 has a threaded inlet portion 11 connected to a water supply pipe or the like 12 and an outlet spout 13 separated from the inlet portion 11 by a dividing wall 14. The dividing wall 14 has a flow passage 15 therethrough and an annular valve seat 16 surrounding the passage 15 which passage 15 in the conventional valve is closed by a flat valve member which is movable into engagement with the valve seat 16 to effect sealing thereof. Valve member 17 (further illustrated in Figures 2 and 4) includes a frusto-conical sealing surface 18 and an operating stem 19 which extends coaxially with the frusto-conical surface 18. The valve member 17 is adapted to plug the passage 15 by engagement with a valve seat having a corresponding frusto-conical configuration. The frusto-conical valve seat surface is formed in a separate valve seat insert 20 of the form illustrated in Figs. 3 and 5.

Referring to these Figures, the seat insert 20 is of generally annular form and includes an enlarged head portion 21 defining an abutment shoulder 22 and an annular shank portion 23 extending axially therefrom and defining a flow passage 24. The head portion 20 has formed therein a frusto-conical seat surface 25 which merges with the passage 24 and is of complimentary shape and size to the frusto-conical sealing surface 18 on the valve member 17. The abutment shoulder 22 of the head portion 21 is adapted to sealingly engage with the convential tap valve seat 16 whilst the shank portion 23 is of such diameter as to be closely and sealingly engaged with the walls of the aperture 15 as illustrated in Fig. 1. To improve the sealing engagement, the abutment shoulder 22 is preferably provided with an integral annular sealing lip 26 and the remote end of the shank 23 is provided with an annular barb member 27 which engages with the walls of the aperture 15 to retain the insert in position.

In use, the operating stem 19 of the valve member 17 is adapted to be engaged in a threaded spindle 28 which may be reciprocated by rotation of the tap handle 29 such that the valve member 17 may be moved axially into engagement with the seat surface 25 or retracted therefrom to permit fluid to pass through the passage 24 and through the tap outlet 13.

The valve stem 19 is preferably formed integrally with the valve member 17 and it preferred that the locating aperture in the inside of the spindle is larger than the diameter of the stem 19 to enable the latter to float therein for self centering purposes. Furthermore, the stem 19 may be pinned into the operating spindle 28 to ensure that it retracts with retraction of the spindle. It is preferred that the valve member and seat insert are formed of a polyacetal material.

Referring to Figs. 6 and 7, there is illustrated a tool 30 for placing the seat insert into the tap aperture 15. The tool 30 includes a head portion 31 of similar diameter to the insert head portion 21 and a stem 32 extending axially from the head portion 31 of similar diameter to the valve seat 19. The tool 30 further includes a frusto-conical portion 33 of complimentary size and shape to the seat surface 25 and a shank guide portion 34. In order to place the seat insert into the tap, the top portion of the tap is unscrewed, and the old washer is replaced by the tool 30. The seat insert 20 is then placed over the tool such that it is closely engaged therewith and the top portion of the tap is screwed back into position. The handle 29 of the tap is then screwed up tightly to the fully off position so that the shank 23 of the seat insert 20 is forced into the aperture 15 until the abutment shoulder 22 abuts against the seat 15. The tool 30 is then replaced by the valve member 17 which may be moved by rotation of the handle 29 into firm engagement with the insert seat surface 25 such that good sealing is achieved.

It will be found that the valve assembly of the present invention will be easy to operate and that as the seat or valve member wears, the valve member will simply take up an enaged position within the seat closer to the top face of the valve member so that such wear will not prevent effective sealing being formed and the life of the assembly will be greatly increased.

**Claims**

1. A valve assembly for a tap (10) of the type having an inlet (11) and outlet (13) communicating through a flow passage (15), said tap (10) including an actuating member (28) adapted to be actuated to close and open said flow passage (15), said valve assembly including a valve member (17) and a co-operable valve seat insert (20), said valve member (17) having a stem portion (19) adapted to be engaged with said acutating member (28) and an enlarged head portion, said valve seat insert (20) being of generally annular form and including an enlarged head portion (21) and a reduced diameter relatively thin walled unthreaded shank portion (23), said enlarged head portion (21) being adapted to be seated on an annular shoulder (16) at one end of said flow passage (15), and the outer diameter of said shank portion (23) being substantially the same as the diameter of said flow passage (15) whereby said shank portion (23) may be forced axially into said flow passage (15) and held sealingly therein, characterised in that said head portion of the valve member (17) includes a frusto conical leading surface and a frusto conical sealing surface (18) extending rearwardly from said frusto conical leading surface, the included angle of said frusto conical leading surface being greater than the included angle of said frusto conical sealing surface, said frusto conical surfaces being coaxial with said stem portion (19), said enlarged head portion (21) of the valve seat including a frusto conical valve seat (25) formed coaxially with said shank portion (23), said valve seat (25) being of complimentary shape to said frusto conical sealing surface (18) and wherein said valve member (17) is adapted to be advanced axially by actuation of said actuating member (28) into engagement with said valve seat insert (20) to close flow through said flow passage (15) in a direction towards said valve member (17) or retracted therefrom to permit said flow through said flow passage (15).

2. A valve assembly according to Claim 1, characterised in that said enlarged head portion (21) of said valve seat insert (20) includes an integrally formed annular sealing lip (26) on its underside adapted to sealingly engage with said annular shoulder (16) of said flow passage (15).

3. A valve assembly according to Claim 1 or Claim 2, characterised in that said inset shank portion (23) has at its free end an annular barb (27) adapted to engage with the wall of said flow passage (15).

4. A valve assembly according to any one of Claims 1 to 3, characterised in that said valve member (17) and said insert (20) are moulded of polyacetyl material.

## Patentansprüche

1. Eine Ventilanordnung für einen Hahn (10) umfassend einen Einlass (11) und einen Auslass (13), die durch einen Fliesskanal (15) verbunden sind, der Hahn (10) enthält einen Auslöser (28) der verwandt wird um ausgelöst zu werden um den Fliesskanal zu schliessen und zu öffnen, die Ventilanordnung schliesst ein Ventil (17) und einen dazugehörigen Ventilsitzeinsatz (20) ein, das Ventil besitzt ein Stammteil (19), das mit dem Auslöser (28) verbunden ist, und ein vergrössertes Kopfteil, der Ventilsitzeinsatz hat eine allgemeine Ringform und schliesst ein vergrössertes Kopfteil (21) und eine, im Durchmesser verminderte, relativ dünnwandigo, gowindoloco Schenkelportion (23) ein, das vergrösserte Kopfteil (21) wird angewandt um auf einer ringförmigen Schulter (16) an einem Ende des Fliesskanals (15) zu sitzen, und der äussere Durchmesser der Schenkelportion (23) ist im wesentlichen derselbe wie der Durchmesser des Fliesskanals (15) wodurch die Schenkelportion (23) axial in den Fliesskanal (15) gezwungen werden und dichtend darin gehalten werden kann, gekennzeichnet dadurch, dass das Kopfteil des Ventiles (17) eine kegelstumpförmige Anfangsfläche und eine kegelstumpfförmige Dichtungsfläche besitzt, die sich rückwärtig von der kegelstumpfförmigen Anfangsfläche ausdehnt, der eingeschlossene Winkel der kegelstumpfförmigen Anfangsfläche ist grösser als der eingeschlossene Winkel der kegelstumpfförmigen Dichtungsfläche, die kegelstumpfförmigen Flächen sind koaxial mit dem Stammteil (19), das vergrösserte Kopfteil (21) des Ventilsitzes schliest einen kegelstumpfförmigen Ventilsitz (25) ein, der koaxial mit der Schenkelportion (23) gebildet ist, der Ventilsitz (25) ist in komplementärer Form zu der kegelstumpfförmigen Dichtungsfläche (18) und worin das Ventil (17) durch Betätigung des Auslösers (28) axial vorgerückt werden kann in Berührung mit dem Ventileinsatz (20) um den Flüss durch den Fliesskanal zu schliessen in eine Richtung zum Ventil (17), oder davon zurückgezogen um den Fluss durch den Fliesskanal gestatten.

2. Eine Ventilanordnung gemäss Anspruch 1, gekennzeichnet dadurch, dass vergrösserte Kopfteil (21) des Ventilsitzeinsatzes (20) eine einheitlich geformte ringförmige Dichtungslippe (26) auf seiner Unterseite einschliesst, welche dichtend mit der ringförmigen Schulter (16) des Fliesskanales (15) verbunden wird.

3. Eine Ventilanordnung gemäss Anspruch 1 oder 2, gekennzeichnet dadurch dass die Einsatz-Schenkelportion (23) einen ringförmigen Widerhaken (27) an ihrem freien Ende hat, um mit der Wand des Fliesskanals (15) verbunden zu werden.

4. Eine Ventilanordnung gemäss einer der Ansprüche 1 bis 3, gekennzeichnet dadurch, dass das Ventil (17) und der Einsatz (20) aus polyacetylem Material gegossen sind.

## Revendications

1. Un ensemble d'obturation pour un robinet (10) du type ayant une entrée (11) et une sortie (13) communicant par un passage d'écoulement (15), ledit robinet (10) comprenant un membre de commande (28) adapté pour être manoeuvré pour fermer et ouvrir le passage d'écoulement (15), ledit ensemble d'obturation comprenant un membre d'obturation (17) et un siège rapporté cooperable (20), ledit membre d'obturation (17) ayant une partie tige (19) adaptée pour s'engager avec le membre de commande (28) et une partie à têtre élargie, ledit siège rapporté (20) étant de forme généralement annulaire et comprenant une partie à tête élargie (21) et une partie queue (23) non filitée de diamètre réduit et à paroi mince, ladite partie à tête élargie (21) étant adaptée pour être assise sur l'épaulement annulaire (16) à un bout dudit passage d'écoulement (15), et le diamètre extérieur de ladite partie queue (23) étant substantiellement le même que le diamètre dudit passage d'écoulement (15) au moyen duquel ladite partie queue (23) peut être axialement forcée dans ledit passage d'écoulement (15) et maintenue en cela de façon étanche, caractérisé en ce que ladite partie tête du membre d'obturation (17) comprend une surface conique fruste de guidage et une surface conique fruste d'étanchésté (18) s'étendant vers l'arrière de ladite surface conique ruste de guidage, l'angle inclus de ladite surface conique fruste de guidage étant plus grand que l'angle inclus de ladite surface conique d'étanchéité, lesdites surfaces coniques frustes étant coaxiaux avec ladite partie tige (19), ladite partie à tête élargie (21) du siège comprenant un siège conique fruste (25) formé coaxiallement avec ladite partie queue (23), ledit siège (25) étant de forme complémentaire à ladite surface conique fruste d'étanchéité (18) et dans laquelle le membre d'obturation (17) est adapté pour avancer axialement par manoeuvre dudit membre de commande (28) pour engagement avec ledit siège rapporté (20) pour fermer ledit écoulement par ledit passage d'écoulement (15) dans une direction vers ledit membre d'obturation (17) ou retracté delà pour permettre ledit écoulement au travers dudit passage d'écoulement (15).

2. Un ensemble d'obturation selon Revendication 1, caractérisé en ce que ladite partie à tête élarge (21) dudit siège rapporté (20) comprend un lévre d'étanchéité (26) de forme annulaire et intégrale sur sa face inférieur, adaptée pour s'enguer de façon étanche avec ledit épaulement annulaire (16) dudit passage d'écoulement (15).

3. Un ensemble d'obturation selon Revendication 1 ou Revendication 2, caractérisé en ce que ladite partie queue (23) a sur son extrémité libre une barbelure annulaire (27) adaptée pour s'engager avec la paroi dudit passage d'écoulement (15).

4. Un ensemble d'obturation selon n'importe laquelle des Revendications 1 à 3, caractérisé en ce que ledit membre d'obturation (17) et ledit siège (20) sont moulés en une matière polyacétylique.

0 022 672

FIG.4.

FIG.5.

FIG.6.

FIG.7.

*Fig. 1.*

*Fig. 2.*

*Fig. 3.*